# EUROPÄISCHE PATENTANMELDUNG

(11) **EP 4 289 261 A1**
(43) Veröffentlichungstag der Anmeldung: **13.12.2023**
(21) Anmeldenummer: 23177442.3
(22) Anmeldetag: 06.06.2023
(51) Int. Cl.: A01G 9/24

(54) **HEIZSYSTEM FÜR PFLANZENKULTUREN**

(30) Priorität: 08.06.2022 AT 504022022; 15.07.2022 AT 505322022
(71) Anmelder: Hofstätter, Helmut, 8071 Wien (AT)
(72) Erfinder: Hofstätter, Helmut, 8071 Wien (AT)
(74) Vertreter: Wildhack & Jellinek Patentanwälte

(57) **Zusammenfassung**

Heizsystem für Pflanzenkulturen mit einer Heizleitung (3), die an einem im wesentlichen lang gestreckten Pflanzentrog oder einen Substratsack mit einer Längsrichtung angeordnet ist, dadurch gekennzeichnet, dass die Heizleitung als eine untere Heizleitung vorgesehen ist, die zwischen Pflanzentrog (7) oder Substratsack und einer Isolierung (6), auf welcher der Pflanzentrog oder der Substratsack steht, in Längsrichtung mittig liegt. (Fig. 2)

## Beschreibung

Die Erfindung betrifft ein Heizsystem für Pflanzenkulturen mit einer Heizleitung, die an einem im wesentlichen lang gestreckten Pflanzentrog oder einen Substratsack mit einer Längsrichtung angeordnet ist.

Im Stand der Technik werden Pflanzenkulturen in Gewächshäusern, wie etwa Glashäusern oder Folientunneln, temporär durch Heizelemente warmgehalten, um sie vor Frost zu schützen. Besonders in der Anzucht- und Blühphase kann allfällig auftretender Frost, der auch in heimischen Klimazonen bis in den Mai hinein auftreten kann, Wachstum, Blütenaustrieb und letztlich den Ernteertrag ungewollt einschränken. Bisher werden in Glashäusern Gruppen von Kohleöfen oder Gasöfen aufgestellt und händisch betrieben. Alternativ werden Gasbrenner aufgestellt oder aus verschiedenen Quellen Warmwasserleitungen großflächig und zirkulierend in die Nähe von Pflanzentrögen und Pflanzen gebracht. Solche Vorrichtungen sind nicht energieeffizient und zudem umständlich zu bedienen. Auch die Temperaturregelung ist nicht genau genug.

Aus der KR 20190084699 A ist bekannt, unterhalb von länglichen Pflanzentrögen für eine Wärmezufuhr zu sorgen sowie im Raum des Pflanzenwachstums Warmluft zu verteilen. Obwohl die Wärme automatisiert verteilbar ist, ist dieses System nicht energieeffizient.

Die CN208191641U lehrt, mehrere Heizleitungen auf der Oberfläche eines Beetes beidseitig neben dem Bereich des Pflanzenaustriebs anzuordnen. Der Wurzelbereich wird dabei nicht ausreichend erwärmt.

Die KR20180060042 A zeigt ein Heizsystem, bei welchem drei Leitungen aufwendig genau in der Pflanzenerde und dort nur im Bereich der Wurzeln angeordnet werden.

Ein "Heating System" der Firma Horconex, publiziert unter https://www.horconex.com/en/solutions/heating-systems offenbart verschiedene Heizsysteme für die Pflanzenbeheizung im Glashaus, insbesondere ein duales System mittels Verrohrung unterhalb der Pflanztröge und in Blütenhöhe. Dieses kann mittels geothermalen Heißwasser beschickt werden. Nachteilig ist hier die geringe Energieeffizienz und zu große Wärmeverluste bei großen Leitungslängen.

Die Erfindung zielt darauf ab, ein Heizsystem wie eingangs angeführt zu schaffen, welche es erlaubt, Pflanzenkulturen energieeffizient, automatisiert und gleichmäßig zu erwärmen. Die Lösung soll kostengünstig erreichbar, einfach zu bedienen, wenig störanfällig sein.

Das erfindungsgemäße Heizsystem erreicht dies dadurch, dass die Heizleitung als eine untere Heizleitung vorgesehen ist, die zwischen Pflanzentrog oder Substratsack und einer Isolierung, auf welcher der Pflanzentrog oder der Substratsack steht, in Längsrichtung mittig liegt.

Um eine geeignete Wärmezufuhr am Pflanzenaustrieb zu gewährleisten, ist vorgesehen, dass auch eine obere Heinzleitung vorgesehen ist, die sich auf dem Substratsack, oder auf der Substratoberfläche im Pflanzentrog befindet, und die auch in Längsrichtung mittig liegt.

In einer weiteren Ausführungsform ist mindestens eine der beiden Heizleitungen eine elektrische Heizleitung, insbesondere ein Zweileiterkabel mit Schutzleiter. Heizleiter dieser Art sind kostengünstig, sicher im Betrieb und aufgrund ihres geringen Querschnitts leicht anbringbar und effizient bei der Wärmeabgabe an ihre Umgebung.

Es ist auch daran gedacht, dass die beiden Heizleitungen mit Warmluft oder Warmwasser betreibbar sind. Dies ist dort von Vorteil, wo Warmluft- oder Warmwasserquellen bereits vorhanden sind.

Alternativ ist eine elektrische Steuerung vorgesehen, durch welche der Betriebszustand des Heizsystems stundengenau über mindestens vierzehn Wochen steuerbar ist. Dadurch wird der Betrieb sicherer und bedarf weniger Arbeitsaufwand.

In einer weiteren alternativen Ausführungsform weist das Heizsystem eine Abdeckung aus einer elastischen Matte aufweist, durch welche der Pflanzentrog oder der Substratsack im wesentlichen über seine gesamte Länge temporär abdeckbar ist, wobei die Matte thermisch isolierend ist. Dadurch wird abermals Energie eingespart und die Effizienz somit gesteigert.

In einer weiteren Ausführungsform ist ein Pflanzentrog vorhanden, welcher einen Boden aufweist und wobei am Boden in Längsrichtung mittig eine Rinne angeordnet ist, deren Tiefe im wesentlichen der Höhe der unteren Heizleitung entspricht. Dadurch wird die untere Heizleitung leichter zentriert, der Wärmeübergang vom Heizkabel zum Pflanztrog verbessert und der Pflanzentrog kann weiterhin sicher auf beidseitigen Füßen stehen.

Es ist auch daran gedacht, dass eine Vielzahl von Pflanzentrögen und/oder Substratsäcken mit jeweils zwei Heizleitungen vorgesehen ist, und wobei durch eine elektronische Steuerung die Heizleistung gleichmäßig über die Heizleitungen nach einem Modell, in welches die Anzahl und die Längen der Heizleitungen sowie die Leistungsverluste in den Heizleitungen einfließen, verteilbar ist. Auch durch diese Maßnahme wird die Energieeffizienz gesteigert.

Weitere Vorteile und Ausführungsformen der Erfindung ergeben sich aus der Beschreibung und den Zeichnungen. Die Erfindung wird nachstehend anhand von in den Zeichnungen dargestellten Ausführungsbeispielen näher erläutert. Es zeigen: Fig. 1 und 2 schematische Querschnitte durch das Heizsystem, Fig. 3 eine Perspektivansicht eines Abschnittes des Heizsystems, Fig. 4 und 5 erneut schematische Querschnitte durch das Heizsystem.

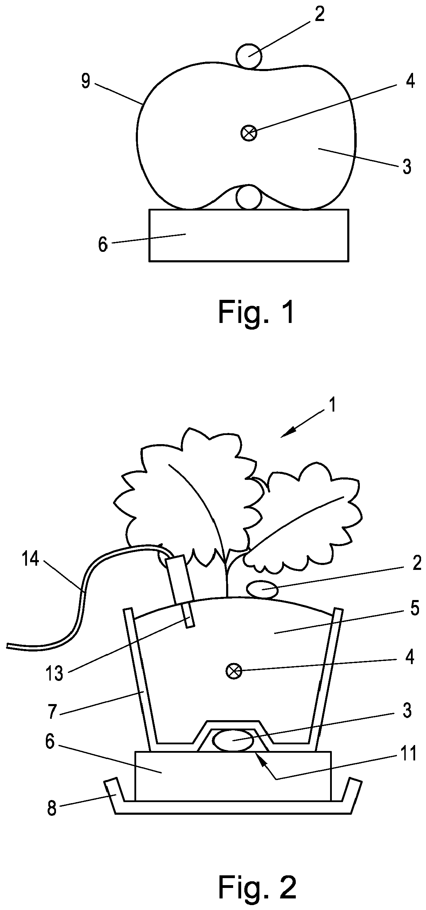

Gemäß Fig. 1 und 2 beginnt die Pflanzenaufzucht mit dem Aufstellen eines Substratsackes 9 oder eines Pflanzentrogs 7, typischerweise in langgestreckten Reihen von mehreren Metern Länge auf Tischen 8, sogenannten Stellagen, die in Gewächshäusern o.ä. aufgestellt sind.

Substratsäcke 9 sind mit Pflanzensubstrat (das im folgenden als Substrat 5 bezeichnet wird) gefüllte langgestreckte Kunststoffsäcke, in denen Jungpflanzen, ggf. auch Saatgut eingebracht ist/sind/waren. Substratsäcke 9 erfüllen die gleiche Funktion wie Blumentöpfe oder Pflanzentröge, indem sie ein Substrat 5 (z.B. Kokosfasern) für die Zeit der Pflanzenaufzucht ausreichend stabil halten und dem Pflanzenaustrieb sowie der Wasserzufuhr und ggf. weiterer Eingaben (wie z.B. eine Sonde 13, siehe unten), durch Einstiche in das Kunststoffmaterial Zugang verschaffen.

Pflanzentröge 7 sind in den meisten Anwendungsfällen Kunststoffformkörper mit Wandstärken im unteren Millimeterbereich. Substratsäcke sind ebenso aus Kunststofffolie gefertigt. Für die Klimatisierung bedeutet dies, dass das Substrat 5 schnell mit der Außentemperatur wechselwirkt, also schnell abkühlt, wenn die Umgebungsluft aufkühlt, aber ebenso schnell Wärme aufnehmen kann, die direkt neben oder am Pflanzentrog 7 bereitgestellt wird.

Die Ertragslage kann bei tiefen Temperaturen stark variieren. Erfrieren die Blüten in der kritischen Wachstumsphase, kann das den Ertrag stark einschränken oder es sogar zu einem Totalausfall der Ernte kommen.

Anstatt einer Flächenheizung wird nun also eine Linienheizung eingesetzt. Dabei wird nur gezielt die Pflanze und ihr umgebenes Substrat 5 erwärmt, nicht aber das gesamte Gewächshaus oder Teile davon.

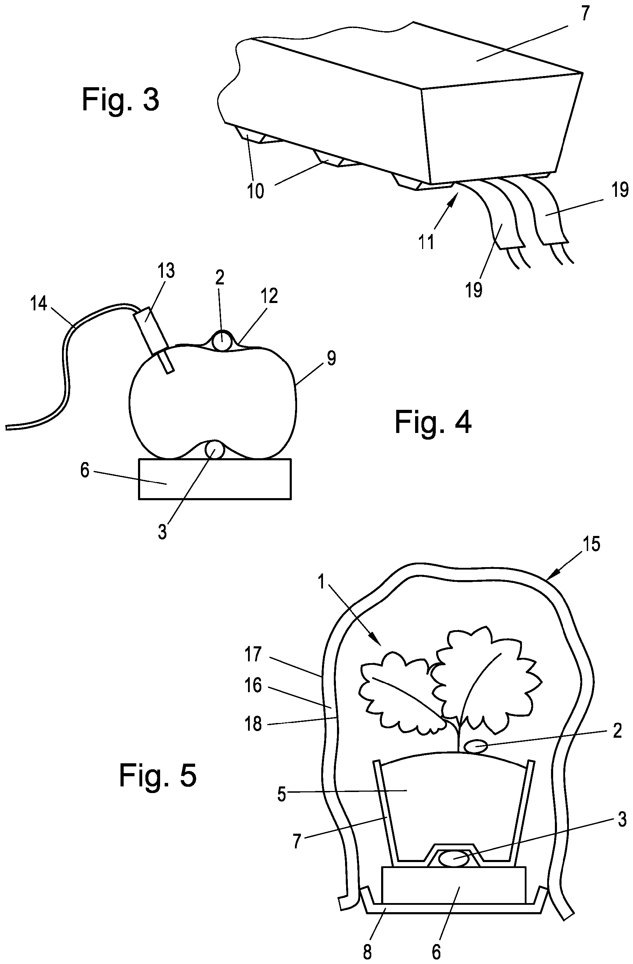

In besonders energiesparender Form genügt es wie in Fig. 1 gezeigt, eine untere Heizleitung 3 unterhalb des Substratsackes 9 entlang seiner Mittellinie und somit mittig anzuordnen. Die untere Heizleitung 3 (oder auch Substratheizung, Substrat-Heizkabel, Substratkabel) erwärmt den Bereich der Wurzeln des Zuchtgewächses, welches in Fig. 1 noch nicht ausgewachsen ist. Zur Steigerung der Energieeffizienz wird der Substratsack 9 auf einem im wesentlichen ebenso länglichen Formkörper aus einem thermisch isolierenden Material abgelegt. Diese Isolierung 6 ist kostengünstig beschaffbar und kann einfach zwischen Pflanzen und einer Schale, bzw. einem Tisch 8 (siehe Fig. 2 und 5) gelagert werden. Die Länge der Isolierung 6 entspricht zweckmäßig der Länge des Substratsackes 9 oder des Pflanzentrogs 7 und beträgt damit typischerweise mehrere Meter. Die Breite gleicht ebenso etwa der Breite des Substratsackes 9 oder des Pflanzentrogs 7.

Die obere Heizleitung 2 (die sog. Frostheizung) ist ebenso auf der Mittellinie des Substratsackes 9 oder des Pflanzentrogs 7 und somit mittig abgelegt und wärmt dort genau den Bereich des Pflanzenaustriebs und der ersten Wuchszone. Tests haben ergeben, dass Spätfrostschäden auch durch den Einsatz einer derart kleinen beheizten Zone vermieden werden können.

Die Erfindung nutzt aus, dass sich bei Stellagen ein Aufbau, der im Querschnitt festgelegt ist, entlang einer gemeinsamen Längsachse 4 (in Fig. 1, 2, 4 und 5 in die Blattebene zeigend) fortsetzt. Die Längsachsen des Pflanzentrogs 7, des Substratsackes 9, des Tisches 8, der Isolierung 6 sowie der Heizleitungen 2, 3 liegen parallel zueinander und zentriert zur Längs- bzw. Mittelachse.

Gemäß Fig. 2 befindet sich die untere Heizleitung 3 in einer Rinne 11, die am Boden des Pflanzentrogs 7 und zwischen deren Füßen 10 ausgebildet wird. Oftmals weisen Pflanzentröge 7 bereits eine Rinne 11 von passenden Maßen (Breite und Höhe) auf und erleichtern damit dem Aufbau des erfindungsgemäßen Systems. Die obere Heizleitung 2 liegt am Hauptaustrieb der Pflanze an einer Seite an und strahlt dort die gewünschte Wärme ausreichend ab. Eine Sonde 13 kann die Temperatur in dem Substrat 5 und im Wurzelbereich und zwischen oberer und unterer Heizleitung messen und einer elektronischen Steuerung oder Überwachung (nicht gezeigt) dauerhaft oder temporär mitteilen.

Um das System einfach und wiederverwendbar zu halten, sind die Heizleitungen elektrisch und im wesentlichen von ovalem oder rundem Querschnitt oder als Flachbandkabel ausgeführt. Zweileiterkabel mit Schutzleiter haben sich als besonders praktisch erwiesen. Sie strahlen zudem Wärme gleichmäßig über ihre gesamte Länge ab.

Es kann in von Vorteil sein, statt elektrischer Wärme auf Warmwasser oder Warmluft zurückzugreifen. Dies z.B. dann, wenn aus bereits vorhandenen Quellen Warmwasser oder Heiß-/Warmluft zur Verfügung steht. Die Heizleitungen 2, 3 sind dann lediglich als Rohrleitungen ausgebildet. Andere wesentliche Aspekte der Erfindung sind davon nicht betroffen.

Gemäß Fig. 3 können auch Heizbänder 19, insbesondere Kohlefaser-Heizbänder, als Heizleitungen verwendet werden. Dies ist im Sinne der effektiven Wärmeeinbringung nicht erforderlich, kann aber aufgrund leichter Beschaffbarkeit und geringem Preis als Alternative herangezogen werden.

In Fig. 4 ist ein Aufbau gezeigt, der sich durch eine Vielzahl von Erleichterungen und Vereinfachungen vom Stand der Technik abhebt. Ein Substratsack 9 wird auf einer Isolierung 6 abgelegt, wobei darauf zu achten ist, die untere Heizleitung 3, die sog. Substratleitung mittig anzuordnen. Durch das Gewicht des Substratsackes 9 ist die platzierte untere Heizleitung 3 ausreichend fixiert. Die obere Heizleitung 2 kann abgelegt und z.B. mit Klebeband 12, das in Längsrichtung etwa alle 50 cm, 80 cm oder auch 100 cm angebracht wird, fixiert werden. Die Sonde 13 überwacht den Temperaturverlauf im Inneren des Substratsackes 9, überträgt die Daten per Kabel 14 oder per Funk, und das erfindungsgemäße System kann den Betrieb aufnehmen.

Abermals steigerungsfähig ist die Effizienz, wenn das gesamte System mit einer Matte 15 wie in Fig. 5 dargestellt, abgedeckt wird. Im Stand der Technik ist das Abdecken von Pflanzenkulturen mit Bahnen von Vlies bereits bekannt. Hier aber kann durch einfach Maßnahmen die thermische Isolierwirkung vergrößert werden. Dafür wird eine Matte 15 verwendet, die zumindest aufbauend auf einer elastischen und dünnen Innenschicht 18 einen Füllstoff 16 umfasst und eine abschließende äußere Aluminiumbeschichtung 17. Zweckmäßig kann auch die Innenschicht 18 aluminiumbeschichtet sein, und/oder die äußere Schicht ist eine aluminiumbeschichtete Folie. Der Füllstoff 16 kann aus einfachem Vlies bestehen oder aus Luftpolsterfolie.

Die Matte 15 sollte leicht und biegsam sein, um die Pflanzen 1 nicht zu beschädigen oder niederzudrücken. Die Matte 15 wird abhängig von den Temperaturverläufen im Gewächshaus eingesetzt und wieder entnommen und dies typischerweise per Hand. Auch die Wachstumsphase der Zuchtgewächse ist dabei zu beachten. In einem späteren Stadium können die Pflanzen zu groß oder zu lichtbedürftig sein, um von einer thermisch isolierenden Matte abgedeckt zu sein.

Das erfindungsgemäße System ist einerseits mit einer elektrischen Steuerung ausgestatten (nicht gezeigt), d.h. zumindest mit einer Zeitschaltuhr, die die Heizleitungen 2, 3 zu bestimmten Zeiten ein- und wieder ausschaltet. Ergänzend kann die Steuerung elektronisch erweitert werden, indem eine computerartige Einrichtung (nicht gezeigt) Parameter des Systems empfängt, in ein gespeichertes Rechenmodell einfließen lässt und daraus errechnet, welche Heizleitung zu welchem Zeitpunkt erreicht werden soll.

Das System ist für alle Pflanzensorten, die in Gewächshäusern kultiviert und vor Frostschäden zu schützen sind, verwendbar. Dabei werden bis zu 20 und mehr Stellagen meist gleicher Länge parallel zueinander aufgestellt und betrieben. Gerade in hoher Skalierung wirken sich die Vorteile der Erfindung besonders gut aus.

Typischerweise ist das erfindungsgemäße System in der Erdbeerzucht verwendbar. Im Zeitraum von 14 Wochen, beispielsweise die (Kalenderwoche) KW 7 bis KW 20 eines Jahres ist zum einen nur bei auftretenden tiefen Temperaturen und zum anderen für alle aufgestellten Stellagen gleichmäßig zu heizen. Abhängig vom Stadium der Zuchtpflanzen und von der KW sind Tageswerte von etwa 12 bis 20°C sowie Nachtwerte von etwa 6 bis 8°C zu erreichen.

### Bezugszeichenliste

- 1: Pflanze
- 2: obere Heizleitung
- 3: untere Heizleitung
- 4: Längsachse
- 5: Substrat
- 6: Isolierung
- 7: Pflanzentrog
- 8: Tisch
- 9: Substratsack
- 10: Fuß des Pflanzentrogs
- 11: Rinne
- 12: Klebeband
- 13: Sonde
- 14: Kabel
- 15: Matte
- 16: Füllstoff
- 17: Aluminiumbeschichtung
- 18: Innenschicht
- 19: Heizband

## Patentansprüche

1. Heizsystem für Pflanzenkulturen mit einer Heizleitung, die an einem im wesentlichen lang gestreckten Pflanzentrog oder einen Substratsack mit einer Längsrichtung angeordnet ist, **dadurch gekennzeichnet, dass** die Heizleitung als eine untere Heizleitung (3) vorgesehen ist, die zwischen Pflanzentrog (7) oder Substratsack (9) und einer Isolierung (6), auf welcher der Pflanzentrog oder der Substratsack steht, in Längsrichtung mittig liegt.

2. Heizsystem nach Anspruch 1, **dadurch gekennzeichnet, dass** auch eine obere Heinzleitung (2) vorgesehen ist, die sich auf dem Substratsack (9), oder auf der Substratoberfläche im Pflanzentrog (7) befindet, und die in Längsrichtung mittig liegt.

3. Heizsystem nach Anspruch 1 oder 2, **dadurch gekennzeichnet, dass** mindestens eine der beiden Heizleitungen (2, 3) eine elektrische Heizleitung, insbesondere ein Zweileiterkabel mit Schutzleiter ist.

4. Heizsystem nach Anspruch 1 oder 2, **dadurch gekennzeichnet, dass** mindestens eine der beiden Heizleitungen (2, 3) mit Warmluft oder Warmwasser betreibbar ist/sind.

5. Heizsystem nach einem der Ansprüche 1 bis 4, **dadurch gekennzeichnet, dass** eine elektrische Steuerung vorgesehen ist, durch welche der Betriebszustand des Heizsystems stundengenau über mindestens vierzehn Wochen steuerbar ist.

6. Heizsystem nach einem der Ansprüche 1 bis 5, **dadurch gekennzeichnet, dass** sie eine Abdeckung aus einer elastischen Matte (15) aufweist, durch welche der Pflanzentrog (7) oder der Substratsack (9) im wesentlichen über seine gesamte Länge temporär abdeckbar ist, wobei die Matte (15) thermisch isolierend ist.

7. Heizsystem nach einem der Ansprüche 1 bis 6, **dadurch gekennzeichnet, dass** ein Pflanzentrog (7) vorhanden ist, welcher einen Boden aufweist und wobei am Boden in Längsrichtung mittig eine Rinne (11) angeordnet ist, deren Tiefe im wesentlichen der Höhe der unteren Heizleitung (3) entspricht.

8. Heizsystem nach einem der Ansprüche 1 bis 7 **dadurch gekennzeichnet, dass** eine Vielzahl von Pflanzentrögen (7) und/oder Substratsäcken (9) mit jeweils zwei Heizleitungen (2, 3) vorgesehen ist, und wobei durch eine elektronische Steuerung die Heizleistung gleichmäßig über die Heizleitungen (2, 3) nach einem Modell, in welches die Anzahl und die Längen der Heizleitungen (2, 3) sowie die Leistungsverluste in den Heizleitungen (2, 3) einfließen, verteilbar ist.
